(19) **Europäisches Patentamt / European Patent Office / Office européen des brevets**

(11) **EP 1 926 225 B1**

(12) # EUROPEAN PATENT SPECIFICATION

(45) Date of publication and mention
of the grant of the patent:
**15.04.2015 Bulletin 2015/16**

(51) Int Cl.:
*H04B 7/005* (2006.01)   *H04W 52/24* (2009.01)
*H04W 52/12* (2009.01)   *H04W 52/14* (2009.01)

(21) Application number: **06807853.4**

(22) Date of filing: **13.07.2006**

(86) International application number:
**PCT/ES2006/000403**

(87) International publication number:
**WO 2007/020305 (22.02.2007 Gazette 2007/08)**

(54) **OUTER-LOOP POWER CONTROL METHOD AND DEVICE FOR WIRELESS COMMUNICATION SYSTEMS**

AUSSENSCHLEIFEN-LEISTUNGSSTEUERUNGSVERFAHREN UND VORRICHTUNG FÜR DRAHTLOSE KOMMUNIKATIONSSYSTEME

PROCEDE ET DISPOSITIF DE REGULATION DE PUISSANCE PAR BOUCLE EXTERNE POUR SYSTEMES DE COMMUNICATION SANS FIL

(84) Designated Contracting States:
**AT BE BG CH CY CZ DE DK EE ES FI FR GB GR HU IE IS IT LI LT LU LV MC NL PL PT RO SE SI SK TR**

(30) Priority: **17.08.2005 ES 200502056**

(43) Date of publication of application:
**28.05.2008 Bulletin 2008/22**

(73) Proprietor: **TOT POWER CONTROL, S.L.**
**28023 Madrid (ES)**

(72) Inventors:
• **CAMPO CAMACHO, Alfonso**
**E-28023 Madrid (ES)**
• **BLANCO CARMONA, Miguel**
**E-28023 Madrid (ES)**
• **MENDO TOMAS, Luis**
**E-28023 Madrid (ES)**
• **HERNANDO RABANOS, Jose, María**
**E-28023 Madrid (ES)**
• **LOPEZ MEDRANO, Alvaro**
**E-28023 Madrid (ES)**

(74) Representative: **Carpintero Lopez, Francisco**
**Herrero & Asociados, S.L.**
**Alcalá 35**
**28014 Madrid (ES)**

(56) References cited:
EP-A1- 1 311 076     CA-A1- 2 494 242
US-A1- 2003 204 615   US-A1- 2004 137 860
US-A1- 2005 003 848   US-A1- 2005 085 255

• **TOP OPTIMIZED TECHNOLOGIES (TOT): "Outer Loop Power Control (OLPC) System Level Simulation", 3GPP DRAFT; R4-050329, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Athens, Greece; 20050516, 16 May 2005 (2005-05-16), XP050173906, [retrieved on 2005-05-16]**
• **TOP OPTIMIZED TECHNOLOGIES: "New test for Downlink Outer Loop Power Control convergence speed", 3GPP DRAFT; R4-050055, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Scottsdale, USA; 20050211, 11 February 2005 (2005-02-11), XP050173608, [retrieved on 2005-02-11]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Object of the Invention

The present invention can be applied within the field of telecommunications and especially in the industry dedicated to the manufacture of both base stations and mobiles in cellular infrastructures for wireless communication systems.

More particularly, the invention described herein within the field of communications relates to a method and device for the outer-loop power control system in a cellular mobile telephone network.

An object of the invention is to allow a power control by means of the outer-loop process which, complemented with the method of the invention and referred to herein as Outage-Based OLPC, is adapted to the changing propagation conditions of the communication channel.

It is also an object of the invention to provide a device adapted to be incorporated in the controller of a base station or of a mobile, carrying out the dynamic adjustment of the power level according to the desired signal-to-interference ratio target established by the proposed Outage-Based OLPC method.

Background of the Invention

In January 1998, the European Telecommunications Standards Institute (ETSI) selected the basic technology for the Universal Mobile Telecommunications System (UMTS) (see ETSI, "The ETSI UMTS Terrestrial Radio Access (UTRA) ITU-R RTT Candidate Submission", June 1998). The main radio interface proposed was the Wideband Code Division Multiple Access (WCDMA) protocol, the characteristics of which offer the chance to completely meet third generation (3G) mobile telephony requirements. Due to the high data transmission rate and the increasingly demanding quality of service (QoS) requirements in 3G, the development of new planning strategies is necessary. The power control system strategy, particularly that of the process used to implement the outer loop of said system, is probably the most studied of these strategies.

The mentioned power control system is generally described below, since the outer-loop functionality, for which this invention proposes a method, is a result of other components of the system.

The power control system in WCDMA-based cellular networks is necessary given that it is an interference-limited technology, due to the fact that all the users share the same frequency spectrum and their codes are not completely orthogonal (see Holma & Toskala: "WCDMA for UMTS, Radio Access for Third Generation Mobile Communications", John Wiley & Sons.).

The ultimate purpose of the power control system in WCDMA is to reach the quality of service required in a particular link, a downlink from the base station to the mobile or terminal equipment, or an uplink from the mobile to the base station, with a minimum transmitted power level (the invention is focused on precisely this aspect).

The main objectives of the power control system in WCDMA networks are:

- Cancellation of the near - far effect: in the event that all the mobile stations transmit the same power without taking into account the distance or the fading to the base station, the mobiles closest thereto would mean significant interference for the farthest terminals.
- Protection against deep fading.
- Minimization of the interference in the network with the subsequent improvement in capacity.
- Longer duration of the battery of the mobile stations.

A power control system for WCDMA is implemented as a whole by means of three different processes:

- By open loop: during the random access process at the beginning of a connection, the mobile/base station estimates the power loss in the uplink/downlink and adjusts its transmission power depending on such loss.
- By closed or inner loop: also called fast power control (1500 Hz), made up of the following three steps:

  1) The corresponding receiver terminal (the base station or the mobile unit) compares the value of the received desired signal-to-interference ratio ($SIR_{rec}$) with the desired signal-to-interference ratio target ($SIR_{target}$) depending on the quality of service required for that specific link and which is set by the outer-loop process described below. The value of the received signal-to-interference ratio ($SIR_{rec}$) can be estimated by means of a hardware architecture, as the one described in "Una Arquitectura Hardware Flexible para Estimación de Relación Señal a Interferencia en Sistemas WCDMA", by Juan Carlos Sáez Ruiz, Department of Electroscience, Digital ASIC, University of Lund.
  2) The same receiver terminal sends power control bits indicating that the transmission power must be increased (if $SIR_{rec} < SIR_{target}$) or decreased (if $SIR_{rec} > SIR_{target}$) by a certain value (normally 1dB).
3) The transmitting unit (base station or mobile) increases or decreases its power by the previously set amount.

- By outer loop (OLPC, Outer-loop Power Control): it is much slower than the closed loop (10-100Hz) and establishes the desired signal-to-interference ratio target ($SIR_{target}$) enabling a predetermined quality target to be maintained. A criterion or a measurement of the quality of a link is the frame error rate (FER) or equivalently, the block error rate (BLER), which is a function of the desired signal-to-interference ratio ($SIR_{rec}$). Given that the inner loop aids in maintaining the desired signal-to-interference ratio ($SIR_{rec}$) close to the signal-to-interference ratio target ($SIR_{target}$), the block error rate (BLER) is ultimately determined by this target value. Thus, in order to reach a quality of service in a certain fading environment, the target ($SIR_{target}$) needs to be adjusted to the suitable value for that environment.

Unfortunately, there is no target ($SIR_{target}$) which can reach the block error rate (BLER) required for all the fading environments in the wireless communication channel. For this reason, the dynamic adjustment of this desired signal-to-interference ratio target ($SIR_{target}$) is currently a reason for study and mechanisms have been described for adjusting said ratio in a suitable manner.

The commonly accepted design for outer-loop power control (OLPC) is based on the target block error rate ($BLER_{target}$) and is called BLER-Based OLPC, which measures this metric and changes the desired signal-to-interference ratio target ($SIR_{target}$) accordingly, depending on whether the target block error rate ($BLER_{target}$) is above or below the desired threshold (see Sampath A, Kumar P S & Holtzman J M (1997), "On setting reverse link target SIR in a CDMA system", Proceedings of the IEEE Vehicular Technology Conference, Phoenix, Arizona, pp. 929-933.). The drawback is that, taking into account that the technique of measuring the block error rate (BLER) is quite slow, especially for high quality services, the performance of these systems is quite deteriorated in dynamic environments with changing fading characteristics in very short time periods (see Holma H., "WCDMA for UMTS", John Wiley & Sons, LTD, 2002). The mentioned slowness for services requiring a low block error rate (BLER) (for example 0.1 %) is due to the fact that the BLER-based OLPC method is based on counting the errors by means of the Cyclic Redundancy Code (CRC), which involves a number of data blocks that is too high to reach an accurate estimation of the block error rate (BLER).

An study in depth about the performance of the BLER-based OLPC method is disclosed in "Outer-loop power control (OLPC) System Level Simulation", TOP OPTIMIZED TECHNOLOGIES (TOT), 3GPP Draft, Mobile Competence Centre, TSG-RAN Working Group 4, Athens, Greece; 16 May, 2005. The results of said study confirm the overall impact of the low convergence speed of the BLER-based OLPC method in terms of dropped calls, capacity and interference when compared to alternative OLPC methods like the Outage-based one. Note that in the Outage-based OLPC, the quality criteria is the value of the desired outage probability associated to a fading marging; also note that the Outage-based OLPC described in the aforementioned document in "Outer-loop power control (OLPC) System Level Simulation" uses (adapts or tunes) one single fading margin, which corresponds to the current fading characteristics.

The most serious problem is that occurring when there is a favorable change in the propagation conditions, which the BLER-based OLPC method reacts to very slowly, making the desired signal-to-interference ratio target ($SIR_{target}$) set by said outer-loop power control method be greater than that necessary for a long time period, with the subsequent increase of interference, and therefore the loss of system capacity.

A great deal of research has been generated with the intention of solving the slow convergence of the power control method which, as has been explained, occurs in the BLER-Based OLPC. One of the most used options as a possible solution consists of modifying the size of the adjustment hops for the desired signal-to-interference ratio target ($SIR_{target}$) imposed by the mentioned BLER-based OLPC method (see again Sampath A, Kumar P S & Holtzman J M (1997), "On setting reverse link target SIR in a CDMA system", Proc. IEEE Vehicular Technology Conference, Phoenix, Arizona, pp. 929-933.). However, this option does not solve the inherent problem of this type of power control method because it also involves a very high number of data blocks for accurately estimating the block error rate (BLER). Based on this principle of the quality criterion complied with by the target block error rate ($BLER_{target}$), several methods can be mentioned which have been the object of the following United States patent applications: US 2004/0137860, US 2004/0157636 and US 2003/0031135.

Another usual alternative for solving the problem of the slow convergence of the BLER-Based OLPC method is the consideration of other metrics (so-called soft metrics), including: Bit Error Rate (BER), re-encoded Symbol Error Rate (SER), re-encoded power metric, number of decoding iterations, modified Yamamoto metric and Euclidean distance (ED) (see Rege Kiran, "On Link Quality Estimation for 3G Wireless Communication Networks", In Proceedings of the IEEE VTS Fall VTC2000. 52nd Vehicular Technology Conference). The advantage of these metrics compared to the block error rate (BLER) is that they can be estimated much more quickly.

Since the purpose of OLPC is to fulfill a constant block error rate target ($BLER_{target}$) and for a moderate change of the block length due to the propagation conditions of the channel, a virtually fixed ratio is established between the block error rate (BLER) and the mentioned soft metrics, whereby it is possible to find the target block error rate ($BLER_{target}$) based on an estimation of any of said metrics. By way of example, several designs of methods based on these metrics should be mentioned which have been the object of the following patents: US 6434124 and US 6763244.

Nevertheless, the drawback of outer-loop power control based on such metrics arises when a change of the propagation conditions of the channel considerably affects the block length. In this situation, the correlation between the block error rate (BLER) and the metrics considered as soft metrics is no longer fixed and then a constant block error rate ($BLER_{target}$) is not reached (see Avidor, Dan, "Estimating the Block Error Rate at the Output of the Frame Selector in the UMTS System", in Proceedings of the Wireless Networks and Emerging Technologies (WNET '02), Wireless and Optical Communications (WOC 2002), July 2002, Banff, Alberta, Canada.).

In addition, in patent application US 6449462, Jonas Blom, Fredrik Gunnarson and Fedrik Gustafsson establish a method for controlling the desired signal-to-interference ratio target ($SIR_{target}$) that is also based on measuring the block error rate (BLER), but together with the estimation of certain representative parameters of the different conditions of the radio channel and of the statistical distribution of the interfering signals. The method is based on determining a quality function defined as the probability of an erroneous frame conditioned by the mentioned parameters. Although this strategy involves capacity gains of the order of 30%, the process for obtaining said quality function involves a delay deteriorating the performance of these types of models. In addition, the article by the same authors describing the invention with more technical detail, "Estimation and Outer Loop Power Control in Cellular Radio Systems" presented to *ACM Wireless Networks,* indicates that the system can be degraded due to the fading in the radio channel.

The present applicant, Álvaro López Medran, in Spanish patent application ES 200202947 (see also the articles by Álvaro López-Medrano: "Optimal SIR target determination for Outer-Loop Control in the W-CDMA System", Proceedings of the IEEE Vehicular Technology Conference (VTC) Fall 2003, 6-9 Oct. 2003, Orlando (USA) and "Optimal SIR target determination for Outer-Loop Control in the W-CDMA System: Inverse SIR Cumulative Distribution Function computation throughout the Newton-Raphson Method", Proceedings of the 12th IST Summit on Mobile and Wireless Communications (Volume II), pp. 732-736, 15-18 Jun. 2003, Aveiro, Portugal) proposes an outer loop of the power control system in 3G systems based on a quality criterion different from that of the target block error rate ($BLER_{target}$). This quality criterion on which the method described in ES 200202947 is based on the outage probability ($P_{outage}$), whereby the already mentioned inherent slow convergence rate of the "BLER-based OPLC" method is prevented.

As explained in ES 200202947, the outage probability ($P_{outage}$) is another quality parameter usually applied in cellular infrastructures, which is previously established during the planning phase of the communications network depending on the service class covered by the communication link, the characteristics of the cells and within each cell, on the characteristics of the service area. Based on this outage probability ($P_{outage}$), the mentioned patent applications proposes determining the fading margin ($M_{(Sii)}$ (dB)) corresponding to the desired signal-to-interference ratio and, therefore the desired signal-to-interference ratio target ($SIR_{target}$) is established for a quality of service criterion given by the outage probability ($P_{outage}$) and statistical moments characteristics of the radio channel being considered.

That set forth in the previous paragraph is translated into a mathematical problem first proposed by S. Kandukuri and S. Boyd (in IEEE Transactions on Wireless Communications, vol. 1, no. 1, pp. 46-55, January 2002.) and known as "Optimal power control in interference-limited fading wireless channels with outage-probability specifications", which has been solved by Álvaro López Medrano in his previous patent application, applying the iterative Newton-Raphson method (see H.R. Schwarz, J. Waldvogel "Numerical Analysis", John Wiley&Sons) to the outer-loop power control.

In short, the outer-loop power control method proposed by López Medrano in the previous patent application ES 200202947 is based on the quality criterion of the outage probability ($P_{outage}$), but a final commitment of an outer loop must be to maintain constant a target block error rate ($BLER_{target}$) corresponding to a certain service (see the specifications document of the 3GPP Third Generation Standard: TS 25.101, 'UE radio transmission and reception (FDD), section 8.8.1' and TS 25.104, 'Base Station (BS) radio transmission and reception (FDD), section 8'). It is therefore not possible to maintain a constant outage probability ($P_{outage}$) for all the propagation conditions, since the block error rate (BLER) itself does not remain constant. This is due to the fact that there is no fixed ratio between the outage probability ($P_{outage}$) and the block error rate (BLER), but rather it depends precisely on the propagation condition in the radio link taking place at that time.

As the fading margin, offered as a result by the outer-loop power control method described in ES 200202947, depends on such outage probability ($P_{outage}$) among other variables, its dynamic adaptation involves changes in said margin. And in conclusion, the desired signal-to-interference ratio target ($SIR_{target}$) should be able to be adjusted by contemplating the changes of the fading margin, for the power level to be adjusted by the outer loop to whatever the propagation conditions may be, the power to be transmitted being minimal.

Description of the Invention

The present invention solves, among others, the previously mentioned problems in each and every one of the different aspects set forth in the background.

The proposed outer-loop power control method and device for mobile communications systems, especially designed for third generation technologies (3G) based on one or several of the standardized Code Division Multiple Access (CDMA) protocols, on one hand ensure a quality of service (QoS) criterion in terms of a preestablished block error rate (BLER) and, on the other hand, are able to be rapidly adapted to the changing conditions of the radio channel according to a new quality criterion, in addition to the previous criterion (BLER criterion), which is based on outage probability.

One aspect of the invention is thus an outer-loop power control method for wireless communication systems which, based in a received data signal from a base station or mobile, comprises the following phases:

i) establishing a target block error rate (BLER$_{target}$)

ii) estimating the desired signal-to-interference ratio (SIR$_{rec}$) and several parameters characterizing the fading in the channel undergone by the received signal,

iii) estimating fading margins by means of the Newton-Raphson method, based on the fading parameters in the channel (channel fading parameters) and on outage probabilities,

iv) determining the state of the data blocks based on the checking of the Cyclic Redundancy Code (CRC),

v) establishing a desired signal-to-interference ratio target (SIR$_{target}$) for the outer loop based on said state of the data blocks, the target block error rate (BLER$_{target}$) and the estimated fading margins associated to the outage probabilities considered.

The desired signal-to-interference ratio target (SIR$_{target}$) established by the proposed power control method, herein called "Outage-Based OLPC", is calculated as the sum of two components which are called SIR$_{outage-tgt}$ and SIR$_{BLER-tgt}$, through a dynamic adjustment function carrying out a mapping between the quality criterion based on the target block error rate (BLER$_{target}$) and another quality criterion based on the outage probabilities.

The required quality of service (QoS) is thus satisfied with the necessary minimum power level, rapidly and dynamically adjusting the power to the propagation conditions of the data signal, therefore the capacity of the system is also optimized given that it is an interference-limited technology.

The dynamic adjustment function whereby the desired signal-to-interference ratio target (SIR$_{target}$) is established as the sum of the two mentioned components: $SIR_{target} = SIR_{outage-tgt} + SIR_{BLER-tgt}$, preferably consists of a neural network.

In the scope of this description, a neural network is understood as a tool for implementing a generic parametrizable function, to which weights and offsets representing the function parameters are applied, which can be adjusted to obtain a certain desired performance, what is known as neural network training.

As is known, the neurons of a neural network are organized in layers, a layer of neurons being defined as a group of neurons sharing the same inputs. The outputs of a layer of neurons are the inputs of the following layer.

Within neural networks, multilayer neural networks are more versatile than a network with a single layer (see Martin T. Hagan, Howard B. Demuth, Mark H. Beale, "Neural Network Design", PWS Pub. Co., 1st edition, 1995). For example, a network with two layers, a first sigmoid layer and a second linear layer, can be trained in order to approximate most functions arbitrarily well. For the case at hand, this structure is implemented for the neural network of the method establishing the desired signal-to-interference ratio target (SIR$_{target}$) of the power control outer loop:

The proposed neural network has a first layer with a number of neurons depending on the number of outage probabilities considered and a second layer having a single neuron as there is a single output: the value of the desired signal-to-interference ratio target (SIR$_{target}$). The input parameters are the fading margins calculated for the different outage probabilities. To incorporate the correcting term corresponding to the quality criterion based on the target block error rate (BLER$_{target}$), the offset of the output layer neuron is matched with the component (SIR$_{BLER-target}$) of the final desired signal-to-interference ratio target (SIR$_{target}$).

The other component (SIR$_{outage-target}$) is generated by means of the described neural network and is adapted to the changing propagation conditions, it must therefore have a fast variation performance.

To enable this fast performance, such component (SIR$_{outage-target}$) must be linked to parameters of the physical signal on which the fading occurs, such as the outage probability for example. Nevertheless, the final quality target is that based on the target block error rate (BLER$_{target}$), therefore this parametrizable function mapping the physical signal parameters, the outage probabilities, to quality parameters corresponding to the block error rate (BLER) is necessary. The neural network therefore takes the fading margins associated to different outage probabilities as an input. Said margins can be estimated as described in patent application ES 200202947 reversing the distribution function of the received desired signal-to-interference ratio (SIR$_{rec}$) by means of the known Newton-Raphson method.

However, the adaptation provided by the first component (SIR$_{outage-tgt}$) of the desired signal-to-interference ratio target (SIR$_{target}$) established for the outer-loop power control is not always ideal and not all the channel variations are taken into account. Therefore, the outer loop by itself cannot ensure the preestablished target block error rate (BLER$_{target}$) criterion. This is why, in order to cover non-ideal performance, the second component (SIR$_{BLER-target}$) is included in the final desired signal-to-interference ratio target ($SIR_{target}$), which is responsible for effectively ensuring the quality defined by the target block error rate ($BLER_{target}$) in the service.

The latter component ($SIR_{BLER-target}$) would ideally remain constant, since its variation means that the other component ($SIR_{outage-target}$) of the desired signal-to-interference ratio target ($SIR_{target}$) does not have the suitable value and the reason is that the channel variations have not been correctly taken into account. Therefore, in practice, the component ($SIR_{BLER-target}$) will have small variations in order to ensure the target block error rate ($BLER_{target}$), but it will not be necessary for it to respond instantaneously to changes in the channel.

Both in a laboratory-simulated real or ideal environment and in the environment in which the method is executed within the scope of a wireless communications system existing in practice, the neural network of the method is subjected to training whenever variations in the component ($SIR_{BLER-target}$) arise. The mentioned neural network is defined by the parameters weighting the different margins and certain offset values. To calculate them, multiple propagation environments are simulated in which valid values of the desired signal-to-interference ratio target ($SIR_{target}$) are obtained for each considered environment. These values are obtained considering the target block error rate ($BLER_{target}$) as a quality target and with them the neural network parameters minimizing the error of the desired signal-to-interference ratio target ($SIR_{target}$) for all the propagation conditions are optimized. The two quality criteria considered are thus related: the criterion based on the target block error rate ($BLER_{target}$) and the outage probability ($P_{outage}$) criterion.

The neural network parameters are obtained according to simulation data, once the method has been executed inside a system working in a real environment, being dynamically adjusted so that the quality criterion given by the target block error rate ($BLER_{target}$) of the service is complied and the power consumption in each communication is furthermore minimized. Considering both commitments, the time evolution of the received desired signal-to-interference ratio ($SIR_{rec}$) that is measured, as well as the average block error rate (BLER) obtained in the communication is taken as input data. With this data, the neural network parameters will be adjusted to the environment of each of the cells of the mobile network.

As a result, the method object of the invention allows using outer-loop power control mechanisms based on a quality criterion different from the known target block error rate ($BLER_{target}$) criterion, proposing a criterion based on outage probability ($P_{outage}$), without reducing the quality of service (QoS) based on said target block error rate ($BLER_{target}$) but improving the performance of the outer-loop, for the reasons set forth in the aforementioned patent application ES 200202947.

Another aspect of the invention relates to an outer-loop power control device for wireless communication systems, comprising at least one programmable electronic device operating according to the previously described method. The programmable electronic device can be a general purpose processor, a digital signal processor (DSP), an application-specific integrated circuit (ASIC) and a programmable card (FPGA) or any combination of the above. The general purpose processor can preferably be a microprocessor or other possible alternatives: a conventional processor, a microcontroller or any state machine in general. The programmable electronic device can even consist of a combination of multiple microprocessors, a microprocessor and one or more DSP devices, or any other configuration in which the execution of the different phases comprised in the method which has been described is distributed in series or in parallel.

The proposed outer-loop power control device for wireless communication systems can optionally comprise a radiofrequency receiver which can receive the data signal coming from a base station or mobile. A radiofrequency transmitter which can send the power control information to the corresponding base station or mobile can also be additionally incorporated in said device. Such outer-loop power control device can thus be incorporated in a wireless communications network controller, or in the user terminal equipment or mobile of the wireless communications systems.

The invention can be applied to any wireless communications system supporting one or more CDMA protocol standards, such as the WCDMA, IS-95, CDMA2000 standards, the HDR specification, etc.

Description of the Drawings

To complement the description which is being made and with the aim of aiding to better understand the features of the invention according to a preferred practical embodiment thereof, a set of drawings is attached as an integral part of said description in which the following has been shown with an illustrative and non-limiting character:

Figure 1 shows a part of a mobile communications system as known in the state of the art, including the elements of a cellular infrastructure, user mobile terminal, base station and remote network controller, related to the object of the invention.

Figure 2 shows a block diagram, according to the state of the art, of part of a base station or of a mobile related to the invention.

Figure 3 shows a schematic depiction of a neuron, the basic element from which and from the interconnections of which a neural network is defined according to a definition known in the state of the art.

Figure 4 shows graphs of several possible functions that are usually used as a transfer function in a neural network.

Figure 5 shows a schematic depiction of the two-layer neural network, whereby the outer-loop power control method according to the object of the invention and according to a preferred embodiment can be implemented.

Figure 6 shows a generic training model for a neural network, as defined in the state of the art of neural networks.

Figure 7 shows a block diagram with the input and output parameters of the outer-loop power control method for mobile communications systems object of the invention, which has been called "Outage-Based OLPC".

Figure 8 shows a block diagram of the outer-loop power control method for mobile communications systems object of the invention, showing the breakdown of the desired signal-to-interference ratio target ($SIR_{target}$) into the two components ($SIR_{outage-tgt}$, $SIR_{BLER-tgt}$) which are added, together with the suitable input parameters.

Preferred Embodiment of the Invention

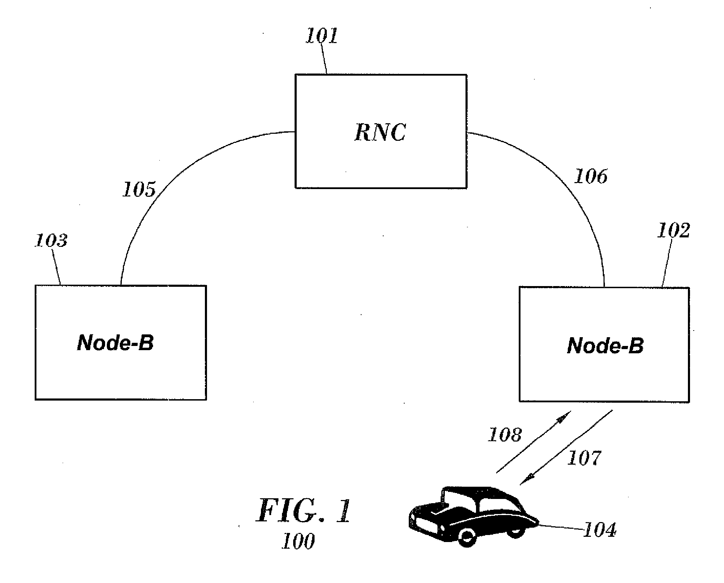

Figure 1 shows a part (100) of a WCDMA mobile communications system. Apart from the invention, the elements shown in the figure are well known and not described in detail. One element of interest is the user terminal equipment or mobile station (104) which is shown by means of the vehicle icon; the WCDMA mobile communications system also comprises several base stations (102, 103) or Nodes-B in the UMTS network, containing embedded software programs, interface cards, memories and processors. This part of the system includes a radio network controller (101) or RNC providing call processing, among other functions. The two base stations (102, 103) and the mobile station (104) represent endpoints of the cordless interface. Each base station (102, 103) is associated to a radio network controller (101) through land lines (105, 106). Hereinafter, it is assumed that the mobile station (104) communicates with the base station (102) by means of the downlink data signal (107) and of the uplink data signal (108).

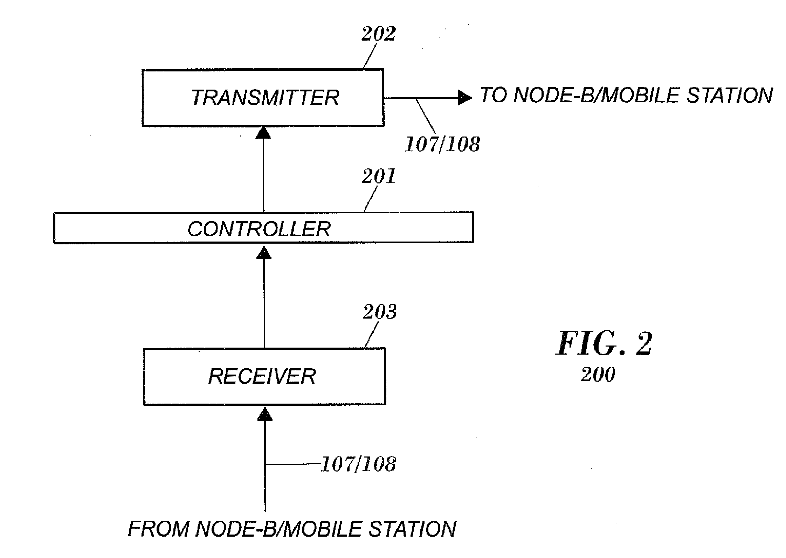

Figure 2 shows the part (200) of both stations, base station (102) and mobile station (104), including the principles on which this invention is based. The known aspects of the elements shown in the mentioned figure are not discussed because a radiofrequency transmitter (202) and receiver (203) are described in detail in the state of the art. Both the base station (102) and the mobile station (104) contain a controller (201), a transmitter (202) and a receiver (203). Thus, in the case of the base station (102), the received signal corresponds to the uplink (108) and in the case of the mobile station (104), the signal that it receives is that of the downlink (107), both of them reach the controller (201) through the receiver (203). The power control device object of the invention is incorporated in the controller (201) and sends through the transmitter (202) a command indicating to the receiving station at that time to increase or decrease its power, depending on the result of the outer-loop power control method described below, the purpose of which is to establish the desired signal-to-interference ratio target ($SIR_{target}$) acting as threshold in the closed loop for power control.

The method of the invention, herein called "Outage-Based OLPC" insofar as it is an outer-loop power control (OLPC) ensuring a quality criterion in terms of a target block error rate ($BLER_{target}$) and can furthermore rapidly adapt the power to the radio channel conditions, considering another quality criterion based on outage probability, is developed according to steps taking place in the controller (201) and detailed below.

The present invention proposes that the desired signal-to-interference ratio target ($SIR_{target}$) provided for the outer loop is given as the sum of two components: a first component ($SIR_{outage-tgt}$) and a second component ($SIR_{BLER-tgt}$), such that:

$$SIR_{t \arg et} = SIR_{outage-tgt} + SIR_{BLER-tgt}$$

The first component ($SIR_{outage-tgt}$) is a function of fading margins ($M_1, M_2, ..., M_N$), calculated previously by means of the Newton-Raphson method or another applicable method and associated to outage probabilities considered ($p_{o1}, p_{o2}, ..., p_{oN}$). Therefore, this component ($SIR_{outage-tgt}$) has a fast variation performance allowing it to be adapted to changing propagation conditions, although said performance is not always ideal, i.e. not all the channel variations are taken into account by the mentioned ($SIR_{outage-tgt}$) and it does not ensure by itself the preestablished target block error rate ($BLER_{target}$) criterion, if it were not for the fact that it is complemented with another component ($SIR_{BLER-tgt}$).

The second component ($SIR_{BLER-tgt}$) covers the non-ideal performance of the channel, ensuring that the target block error rate ($BLER_{target}$) for the service is indeed maintained. This component ($SIR_{BLER-tgt}$) would remain constant in an ideal environment, but in practice, it will have small variations, it not being necessary for it to respond immediately to changes in the channel. It is therefore necessary to maintain in this component the characteristic hoop process of the known BLER-based OLPC method, which precisely has the characteristics of a slow response but which can accurately ensure the specified target block error rate ($BLER_{target}$).

Returning to the first component ($SIR_{outage-tgt}$) which is determined, as has already been mentioned, by a function of the fading margins ($M_1, M_2, ..., M_N$) associated to the different outage probabilities ($p_{o1}, p_{o2}, ..., p_{oN}$) considered, the fact that a single outage probability and therefore a single associated fading margin is not considered, is because it is not possible to maintain the outage probability constant for all the propagation conditions, the block error rate (BLER) would not be constant either, and consequently the outer-loop target would not be maintained. The previous discrepancy between outage probability and block error rate (BLER) is due to the fact that there is no constant ratio between both criteria, but rather the ratio depends precisely on the radio condition taking place at the time.

Several ways of finding the function are proposed below, which function provides as a result the first component ($SIR_{outage-tgt}$) based on the fading margins ($M_1$, $M_2$,..., $M_N$), such that the Outage-Based OLPC method meets the quality criterion imposed by the target block error rate ($BLER_{target}$), complying with a minimum power consumption in the transmission.

One of the simplest embodiment alternatives that can be proposed is a linear combination of the fading margins ($M_1$, $M_2$,..., $M_N$), whereby the first component ($SIR_{outage-tgt}$) is a summation of said fading margins ($M_1$, $M_2$,..., $M_N$) weighted or multiplied by suitable fading margin constants ($K_1$, $K_2$,..., $K_N$), obtaining the desired signal-to-interference ratio target ($SIR_{target}$):

$$SIR_{t\arg et} = SIR_{BLER-tgt} + k_1 \cdot M_1 + k_2 \cdot M_2 + ... + k_N \cdot M_N \qquad (1)$$

A particular case is the method described in patent application ES 200202947, mentioned as a background document; indeed, if all the constants except one are cancelled in the previous equation and a single fading margin is taken:

$k_1 = 1$
$k_i = 0 \forall i \neq 1$

obtaining:

$$SIR_{t\arg et} = SIR_{outage} + k_1 \cdot M_1$$

To generalize the problem to more cases contemplating all the propagation conditions, involving non linear functions, neural networks will be used as a tool for the possibility of defining such functions that are not necessarily linear and are adapted to the propagation conditions in real communication environments.

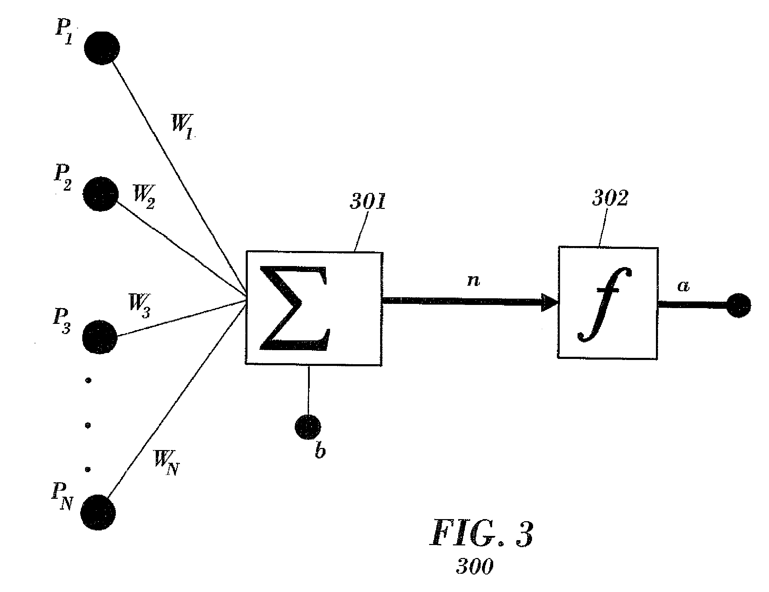

The following neural network model will be used to illustrate the principle of the invention: Figure 3 shows a neuron (300), the basic element from which and from the interconnections of which a neural network is defined. A generic neuron (300) has N inputs ($p_1$, $p_2$,..., $p_N$), which, once they have been weighted by weights ($w_1$, $w_2$, ..., $w_N$), are introduced in an adder (301). Furthermore, an offset (b) is applied to the adder, which offset is added to the weighted inputs of the neuron (300), such that the value at the output (n) of the adder (301) is:

$$n = b + \sum_{i=1}^{N} w_i \cdot p_i$$

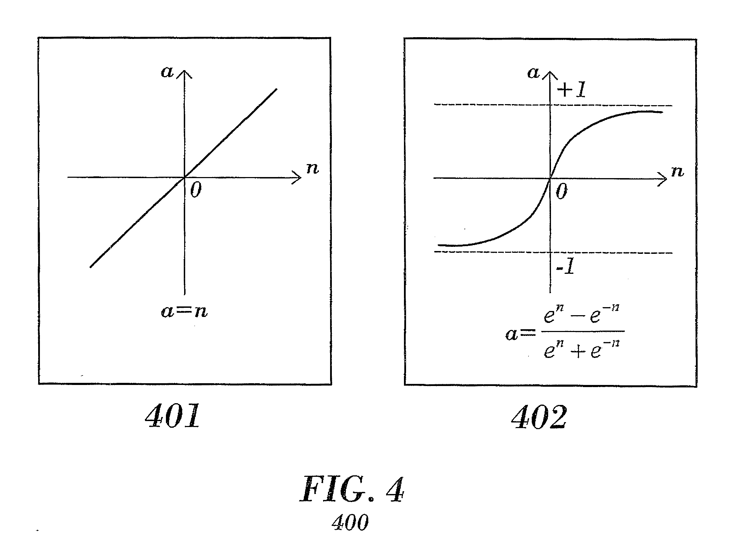

This value (n) is the input argument of a transfer function (302) which allows, for example, introducing non-linear performance, and the result of which is the final output (a) of the neuron (300). Figure 4 graphically shows several functions that are usually used as a transfer function (302): the first graph (401) corresponds to a linear transfer function and graph (402) to a hyperbolic tangent type sigmoid function.

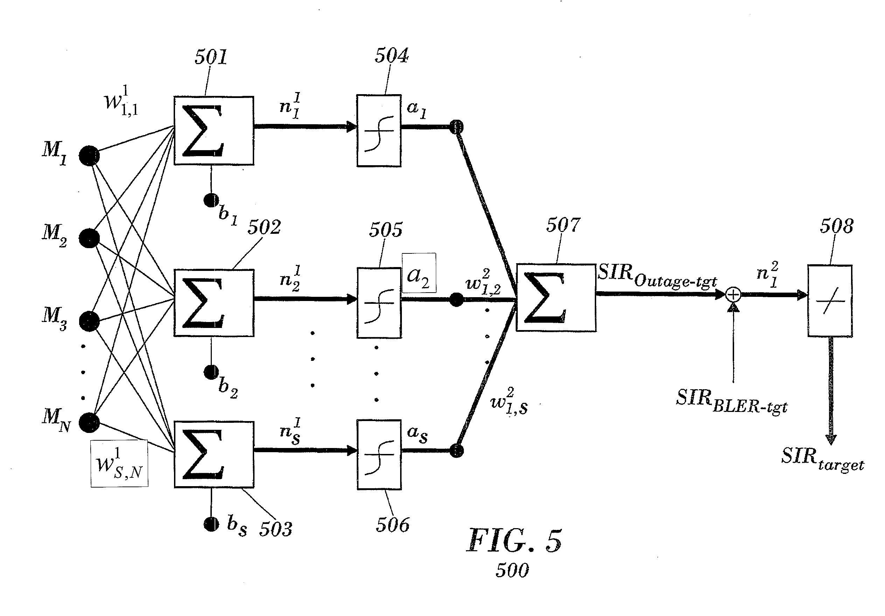

A preferred implementation of the function carrying out the mapping between a quality criterion based on the outage probabilities ($p_{o1}$, $p_{o2}$, ..., $p_{oN}$) and the quality criterion based on the target block error rate ($BLER_{target}$), characterizing the method of the invention, is the neural network (500) shown in Figure 5, with a possible two-layer structure. This neural network (500) has N inputs matching the estimated fading margins ($M_1$, $M_2$,..., $M_N$), which as has been stated are associated to the outage probabilities ($p_{o1}$, $p_{o2}$, ..., $p_{oN}$) and to channel fading parameters (706) characterizing the received data signal (107, 108). Said channel fading parameters (706) can be statistical moments such as those considered in the mentioned patent application ES 200202947: the standard deviation corresponding to the lognormal fading ($\sigma_N$), the Rice factor (K) of the desired signal and the standard deviation ($\sigma_I$) corresponding to the distribution describing the variations of the interfering signals.

The neural network (500) comprises at least one input layer and a single output layer, although in a possible embodiment such as that shown in Figure 5, it is also simplified to a single input layer.

The input layer of the neural network (500) or first layer of neurons, which will be indicated by superscript 1 in the parameters associated thereto, is formed by S neurons. Each of the neurons has a first step formed by an adder (501, 502, 503) with N inputs corresponding to the N inputs of the neural network (500) weighted by the weights $\left(w_{ij}^1\right)$ wherein *i* indicates the index of each input and *j* indicates the index of each neuron. Furthermore, each adder (501, 502, 503) has an offset *(b_j)* which is added to the weighted inputs of the neuron, such that the value $\left(n_j^1\right)$ at the output of its adder (501, 502, 503) is:

$$n_j^1 = b_j + \sum_{i=1}^{N} w_{ij}^1 M_i$$

Each value $\left(n_j^1\right)$ is taken to a transfer function (504, 505, 506) which produces the respective outputs *(a_j)* and allows, for example, introducing non-linear performance. Said outputs *(a_j)* of the first layer of neurons will be the inputs of the following layer of neurons.

The model can be extended to an arbitrary number of layers of neurons although only two layers are shown for the sake of simplicity.

The performance and the blocks forming the second layer of neurons in Figure 5 are conceptually the same as in the first layer, although with several particularities derived from the fact that this is the output layer of the neural network (500). This basically affects three aspects. Firstly, the latter layer is formed by a single neuron providing the only output of the neural network (500), which is precisely the desired signal-to-interference ratio target (SIR$_{target}$) for the outer loop. In order for the output layer to generate the required values, the output range of the transfer function (508) must be chosen accordingly. A linear function with an infinite output range has been chosen in the proposed example. Finally, as mentioned previously, the offset applied in the adder (507) of this output neuron matches the correcting term based on target block error rate (BLER$_{target}$), i.e. the second component (SIR$_{BLER-tgt}$) of the final desired signal-to-interference ratio target (SIR$_{target}$), which therefore is:

$$\sum_{j=1}^{S} w_{1,j}^2 + SIR_{BLER-tgt} = SIR_{outage-tgt} + SIR_{BLER-tgt} = SIR_{target}$$

It must be taken into account that a characteristic of the first component (SIR$_{outage-tgt}$) of said desired signal-to-interference ratio target (SIR$_{target}$) is that, in contrast with the fading margins (M$_1$, M$_2$,..., M$_N$) which are used to calculate it, it can be negative.

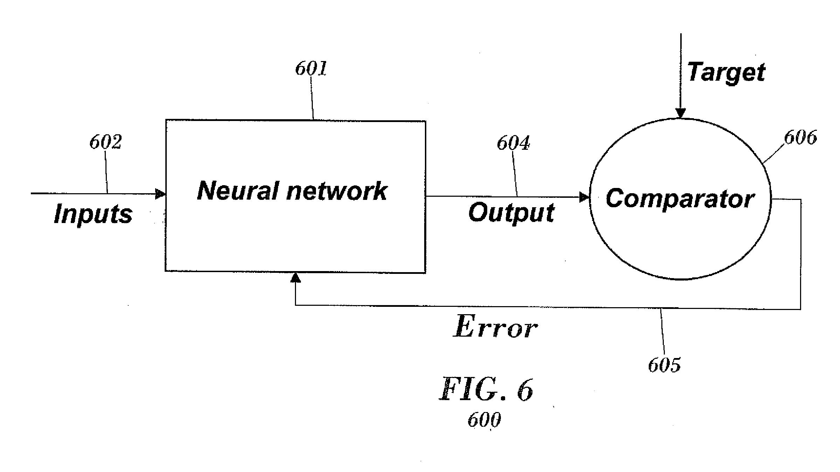

Figure 6 describes the training model for a generic neural network (601). In order to adjust its internal parameters, weights and offsets of the various neurons forming the neural network (500, 601), it is necessary to have a set of input data (602) and of the targets (603) that the network must reach for said inputs. There are well known algorithms which allow training the network, minimizing the error (605) between the output values (604) and the target values (603) offered by a comparator (606).

In the proposed neural network (500), it will be necessary to have, in known propagation environments, margins (M$_1$, M$_2$,..., M$_N$) for the selected outage probabilities (p$_{o1}$, p$_{o2}$, ..., p$_{oN}$) which must be introduced as input data, and the optimal desired signal-to-interference ratio target (SIR$_{target}$) for each environment, to which the output of the neural network (500) must be adjusted. The weights (w$_i$) and the offsets (b$_i$) of all the layers are adjusted by means of error back-propagation algorithms in order to minimize the error at the output with different propagation conditions.

It is easy to check that the initially considered linear combination solution is comprised in this other solution as a particular case. In fact, even the process for adjusting coefficients is very similar, attempting to reduce, in the case of linear combination, the error at the output by means of a least squares process, for example.

The necessary data for training the neural network (500) can be obtained either by means of simulation or by measurements in a controlled environment with different propagation conditions. The optimal value of the desired signal-to-interference ratio target (SIR$_{target}$) to which the output of the neural network (500) must be adjusted is obtained by considering a certain target block error rate (BLER$_{target}$) as a quality target. This is the basis for the neural network (500) to allow establishing a mapping between the quality criteria based respectively on said target block error rate (BLER$_{target}$) and on the outage probabilities (p$_{o1}$, p$_{o2}$, ..., p$_{oN}$). Furthermore, it is useful to cover the greatest possible variety of propagation conditions for data collection for the purpose of minimizing the overall error made in the largest number of possible environments.

Another considered possibility is that the outer-loop power control method of the invention operating in a real system can adjust the parameters of its outer loop to adapt them to the environments in which the users to whom communication is provided are located. To that end, the variations which are measured in the second component ($SIR_{BLER-tgt}$) of the desired signal-to-interference ratio target ($SIR_{target}$) provide information about the errors that the neural network (500) is making, because if it were perfect, the mentioned component ($SIR_{BLER-tgt}$) should remain constant in any condition. In fact, the neural network (500) can be retrained based on the variations of this component ($SIR_{BLER-tgt}$).

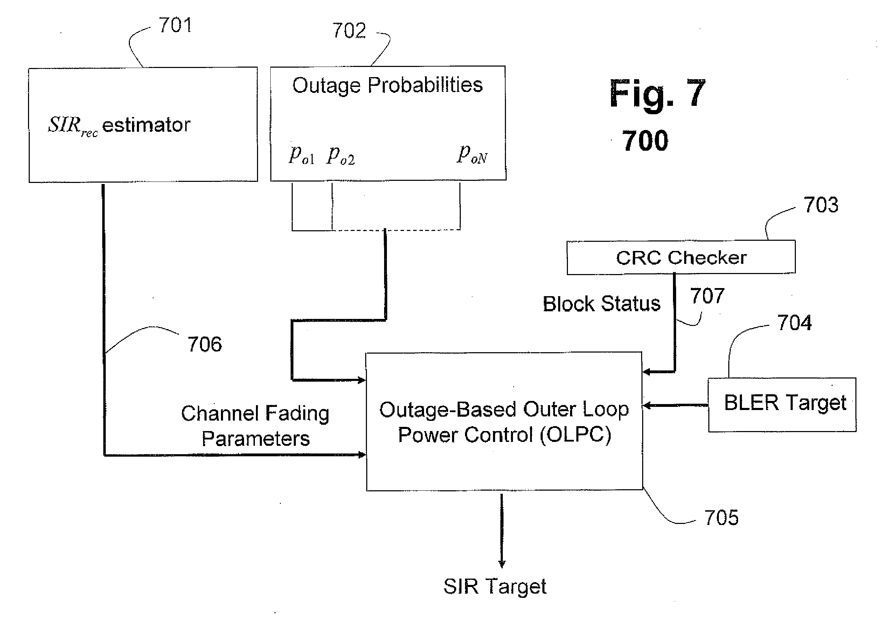

The input data used by this Outage-Based Outer-loop Power Control (OLPC) method proposed in this invention is defined below, using the blocks of the diagram (700) in Figure 7 as reference:

The received signal-to-interference ratio ($SIR_{rec}$) is first estimated (701) by means of the corresponding hardware architecture. Channel fading parameters (706) considered to be suitable for characterizing the received signal (107, 108) are included in this estimation (701). For example, in the aforementioned patent application ES 200202947, the channel fading parameters (706) considered are: the standard deviation corresponding to lognormal fading ($\sigma_N$) and the Rice factor (K) of the desired signal, as well as the standard deviation ($\sigma_I$) corresponding to the distribution describing the variations of the interfering signals.

The fading margins ($M_1$, $M_2$,..., $M_N$) associated to the previous channel fading parameters (706) are also a function of the corresponding outage probabilities ($p_{o1}$, $p_{o2}$, ..., $p_{oN}$) considered, and these outage probabilities ($p_{o1}$, $p_{o2}$, ..., $p_{oN}$) are therefore another of the inputs (702) necessary for the Outage-Based Outer-loop Power Control (OLPC) method object of the invention.

Continuing with the blocks of Figure 7, the decoded data of each frame involved in the communication pass to a CRC checker (703) determining or indicating whether the frame has been correctly decoded or, on the contrary, contains errors, upon checking the Cyclic Redundancy Code (CRC) bits added to the end of the data frame. For each received and decoded frame, the CRC checker (703) provides a state of the data blocks (707) consisting of a frame indicating whether the data frame is suitably decoded or, because it is not, it has been deleted. It should be noted that this is the known operating principle of the previous BLER-based Outer-loop Power Control (OLPC) method, in which the desired signal-to-interference ratio target ($SIR_{target}$) changes for the outer loop in correspondence with the result provided by said CRC checker (703).

The method object of this invention, herein called Outage-Based Outer-loop Power Control (OLPC), occurs in block (705) and processes all the previously mentioned inputs (702, 706, 707), including the introduction (704) of the target block error rate ($BLER_{target}$), in the manner described in the following paragraphs.

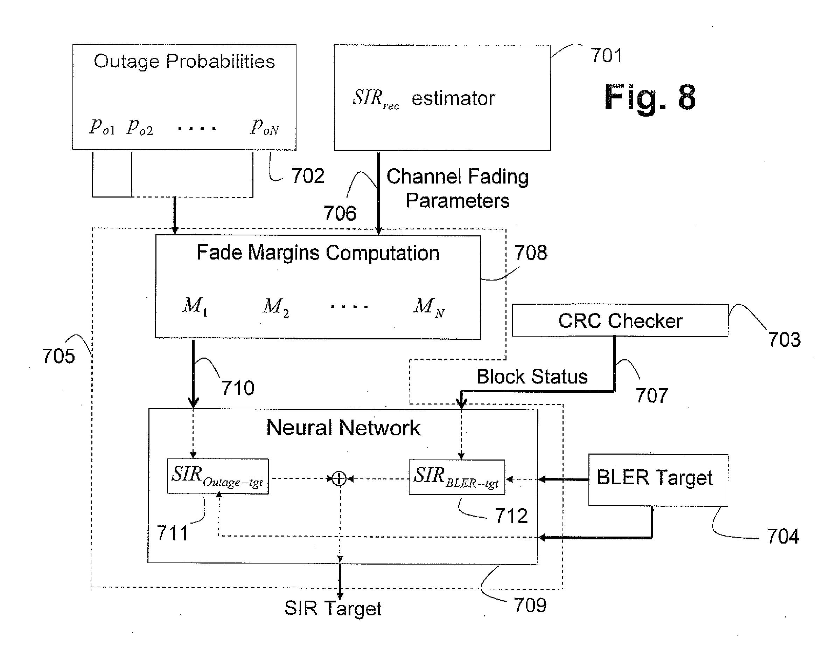

Figure 8 specifies in more detail the steps taking place in block (705) of Figure 7, i.e. it shows a preferred embodiment of the operation of the Outage-Based Outer-loop Power Control (OLPC) method of the invention.

The count (708) or the estimation of the fading margins ($M_1$, $M_2$,..., $M_N$) corresponding to the outage probabilities ($p_{o1}$, $p_{o2}$, ..., $p_{oN}$) that are considered as their input parameters (702), and also correspond to the channel fading parameters (706) given by the estimator (701) of the received signal-interference ratio ($SIR_{rec}$), can be carried out based on the method proposed in the aforementioned patent application ES 200202947. The mentioned fading margins ($M_1$, $M_2$,..., $M_N$) are one of the inputs (710) of the neural network (500) and are used, together with the target block error rate ($BLER_{target}$) introduced by the input (709), to obtain the first component ($SIR_{outage-tgt}$) of the desired signal-to-interference ratio target ($SIR_{target}$). In addition, the second component ($SIR_{BLER-tgt}$) is obtained with the reintroduction (704) of the target block error rate ($BLER_{target}$) and of the state of the data blocks (707) generated by the CRC checker (703). Finally, both components are added and the desired signal-to-interference ratio target ($SIR_{target}$) is obtained for the outer-loop power control.

The previous design has been used to describe the principles of the invention; nevertheless other alternatives which are not detailed herein are possible but they incorporate the same essence and purpose. For example, although the invention has been illustrated herein by means of discrete functional blocks which can be executed in a wireless communications network controller (201), the functions of any of these blocks can be carried out using one or several suitably programmed processors.

In the same line, the invention can be applied for other standards apart from WCDMA, as well as for the power control of any signal received by base stations and by the user terminal equipment or mobile stations.

**Claims**

1. An outer-loop power control method for wireless communication systems which, from a received data signal (107, 108) coming from a base station (102, 103) or from a mobile station (104), comprises the following phases:

establishing a target block error rate (BLER$_{target}$),
estimating (701) the desired signal-to-interference ratio (SIR$_{rec}$) and channel fading parameters (706) characterizing the received signal (107, 108),
estimating fading margins (M$_1$, M$_2$,..., M$_N$) associated to outage probabilities (p$_{o1}$, p$_{o2}$, ..., p$_{oN}$) and to the channel fading parameters (706),
indicating the state of the data blocks (707) based on the checking of a Cyclic Redundancy Code (703),

**characterized in that** it establishes a desired signal-to-interference ratio target (SIR$_{target}$) for the outer loop based on said state of the data blocks (707),
said fading margins (M$_1$, M$_2$,..., M$_N$)
and the target block error (BLER$_{target}$) of the outer loop by means of a dynamic adjustment function carrying out a mapping between
a first quality criterion based on the outage probabilities (p$_{o1}$, p$_{o2}$, ..., p$_{oN}$) associated to said fading margins (M$_1$, M$_2$,..., M$_N$)
and a second quality criterion based on the target block error rate (BLER$_{target}$),
such that the power is adapted to the propagation conditions of the data signal (107, 108)
and, for the mapping, the dynamic adjustment function generating
a first component (SIR$_{outage-tgt}$) of the desired signal-to-interference ratio target (SIR$_{target}$) adapted to the propagation conditions of the data signal (107, 108) and
a second component (SIR$_{BLER--tgt}$), obtained from the state of the data blocks (707) and the target block error (BLER$_{target}$) of the outer loop by applying the second quality criterion based on the target block error rate (BLER$_{target}$), the dynamic adjustment function using both the first component (SIR$_{outage-tgt}$) and the second component (SIR$_{BLER--tgt}$) for establishing the desired signal-to-interference ratio target (SIR$_{target}$) for said outer loop and being adjusted such that said signal-to-interference ratio target (SIR$_{target}$) is adapted to the propagation conditions by means of the first component (SIR$_{outage-tgt}$) while fulfilling the second quality criterion based on the target block error rate (BLER$_{target}$).

2. An outer-loop power control method for wireless communication systems according to claim 1, **characterized in that** the adjustment function is carried out by means of a neural network (500) comprising at least one input layer in which the fading margins (M$_1$, M$_2$,..., M$_N$) are input for generating the first component (SIR$_{outage-tgt}$) and an output layer which, having been previously trained for the input fading margins (M$_1$, M$_2$,..., M$_N$) together with the state of the data blocks (707) and the target block error (BLER$_{target}$) of the outer loop, establishes the desired signal-to-interference ratio target (SIR$_{target}$) for said outer loop by combining the first component (SIR$_{outage-tgt}$) with the second component (SIR$_{BLER--tgt}$).

3. An outer-loop power control method for wireless communication systems according to claim 2, **characterized in that** the output layer of the neural network (500) adds the second component (SIR$_{BLER--tgt}$) to the first component (SIR$_{outage-tgt}$).

4. An outer-loop power control method for wireless communication systems according to claim 3, **characterized in that** the neural network (500) is trained whenever there are variations in the component (SIR$_{BLER-tgt}$).

5. An outer-loop power control device for wireless communication systems, **characterized in that** it comprises at least one programmable electronic device operating according to the method described in any of claims 1 to 4.

6. An outer-loop power control device for wireless communication systems according to claim 5, **characterized in that** the programmable electronic device is selected from a general purpose processor, a digital signal processor, an application-specific integrated circuit and a programmable card or any combination of the above.

7. An outer-loop power control device for wireless communication systems according to claims 5 or 6, **characterized in that** it comprises a radiofrequency receiver (203) capable of receiving a data signal (107, 108) coming from a base station (102, 103) or from a mobile station (104) of the wireless communication system.

8. An outer-loop power control device for wireless communication systems according to any of claims 5 to 7, **characterized in that** it comprises a radiofrequency transmitter (202) capable of sending power control information to a base station (102, 103) or to a mobile station (104) of the wireless communication system.

9. An outer-loop power control device in a wireless communication system according to any of claims 6 to 8, incorporated in a wireless communications network controller.

10. An outer-loop power control device in a wireless communication system according to any of claims 6 to 8, incorporated in a mobile station for wireless communications systems.

**Patentansprüche**

1. Ein Außenschleife-Leistungssteuerverfahren für drahtlose Kommunikationssysteme, welches, von einem von einer Basisstation (102,103) oder von einer Mobilstation (104) kommenden Datenempfangssignal (107,108), die folgenden Phasen umfasst:

Einrichten einer Zielblock-Fehlerrate ($BLER_{target}$),
Abschätzen (701) des gewünschten Signalinterferenzverhältnisses ($SIR_{rec}$) und von das Empfangssignal (107, 108) charakterisierenden Kanalfading-Parametern (706),
Abschätzen von Fadingmargen ($M_1$, $M_2$,..., $M_N$), welche mit Ausfallwahrscheinlichkeiten ($p_{o1}$, $p_{o2}$,... $p_{oN}$) und mit Kanalfading-Parametern (706) verknüpft sind,
Angeben des Zustands der Datenblöcke (707) basierend auf dem Überprüfen eines zyklischen Redundanzcodes (703),
**dadurch gekennzeichnet, dass** dieses ein gewünschtes Signalinterferenzverhältnis-Ziel ($SIR_{target}$) für die Außenschleife einrichtet, basierend auf
dem Zustand der Datenblöcke (707),
den Fadingmargen ($M_1$, $M_2$, ..., $M_N$)
und dem Zielblockfehler ($BLER_{target}$) der Außenschleife
mit Hilfe einer dynamischen Einstellfunktion, welche ein Mapping ausführt zwischen
einem ersten Qualitätskriterium basierend auf den mit den Fadingmargen ($M_1$, $M_2$,..., $M_N$) verknüpften Ausfallwahrscheinlichkeiten ($p_{o1}$, $p_{o2}$, ..., $p_{oN}$)
und einem zweiten Qualitätskriterium basierend auf der Zielblock-Fehlerrate ($BLER_{target}$),
sodass die Leistung auf die Übertragungsbedingungen des Datensignals (107,108) angepasst wird
und, wobei, für das Mapping, die dynamische Einstellfunktion erzeugt
eine erste Komponente ($SIR_{outage-tgt}$) des gewünschten Signalinterferenzverhältnis-Ziels ($SIR_{target}$), welche auf die Übertragungsbedingungen des Datensignals (107,108) angepasst ist, und
eine zweite Komponente ($SIR_{BLER-tgt}$), welche aus dem Zustand der Datenblöcke (707) und dem Zielblockfehler ($BLER_{target}$) der Außenschleife durch Anwenden des zweiten Qualitätskriteriums basierend auf der Zielblock-Fehlerrate ($BLER_{target}$) erhalten wird,
wobei die dynamische Einstellfunktion beide, die erste Komponente ($SIR_{outage-tgt}$) und die zweite Komponente ($SIR_{BLER--tgt}$), zum Einrichten des gewünschten Signalinterferenzverhältnis-Ziels ($SIR_{target}$) für die Außenschleife verwendet und derart eingestellt ist, sodass das Signalinterferenzverhältnis-Ziel ($SIR_{target}$) auf die Übertragungsbedingungen mit Hilfe der ersten Komponente ($SIR_{outage-tgt}$) angepasst wird, während das zweite Qualitätskriterium basierend auf der Zielblock-Fehlerrate ($BLER_{target}$) erfüllt wird.

2. Ein Außenschleife-Leistungssteuerverfahren für drahtlose Kommunikationssysteme gemäß Anspruch 1, **dadurch gekennzeichnet, dass** die Einstellfunktion mit Hilfe eines neuronalen Netzwerks (500) ausgeführt wird, welche umfasst zumindest eine Eingabeschicht, in welcher die Fadingmargen ($M_1$, $M_2$, ..., $M_N$) zum Erzeugen der ersten Komponente ($SIR_{outage-tgt}$) eingegeben werden, und eine Ausgabeschicht, welche, wobei diese vorab für die eingegebenen Fadingmargen ($M_1$, $M_2$, , ..., $M_N$) zusammen mit dem Zustand der Datenblöcke (707) und dem Zielblockfehler ($BLER_{target}$) der Außenschleife eingewiesen wurde, das gewünschte Signalinterferenzverhältnis-Ziel ($SIR_{target}$) für die Außenschleife durch Kombinieren der ersten Komponente ($SIR_{outage-tgt}$) mit der zweiten Komponente ($SIR_{BLER--tgt}$) einrichtet.

3. Ein Außenschleife-Leistungssteuerverfahren für drahtlose Kommunikationssysteme gemäß Anspruch 2, **dadurch gekennzeichnet, dass** die Ausgabeschicht des neuronalen Netzwerks (500) die zweite Komponente ($SIR_{BLER-tgt}$) zu der ersten Komponente ($SIR_{outage--tgt}$) hinzufügt.

4. Ein Außenschleife-Leistungssteuerverfahren für drahtlose Kommunikationssysteme gemäß Anspruch 3, **dadurch gekennzeichnet, dass** das neuronale Netzwerk (500) eingewiesen wird, wenn immer es Veränderungen in der Komponente ($SIR_{BLER-tgt}$) gibt.

**5.** Eine Außenschleife-Leistungssteuervorrichtung für drahtlose Kommunikationssysteme, **dadurch gekennzeichnet, dass** diese zumindest eine programmierbare elektronische Vorrichtung umfasst, welche gemäß dem in einem der Ansprüche 1 bis 4 beschriebenen Verfahren betrieben wird.

**6.** Eine Außenschleife-Leistungssteuervorrichtung für drahtlose Kommunikationssysteme gemäß Anspruch 5, **dadurch gekennzeichnet, dass** die programmierbare elektronische Vorrichtung aus einem Universalprozessor, einem Digitalsignalprozessor, einem anwendungsspezifischen integrierten Schaltkreis und einer programmierbaren Karte oder einer Kombination der obigen ausgewählt ist.

**7.** Eine Außenschleife-Leistungssteuervorrichtung für drahtlose Kommunikationssysteme gemäß Anspruch 5 oder 6, **dadurch gekennzeichnet, dass** diese einen Funkfrequenzempfänger (203) umfasst, welcher zum Empfangen eines von einer Basisstation (102, 103) oder von einer Mobilstation (104) des drahtlosen Kommunikationssystems kommenden Datensignals (107, 108) geeignet ist.

**8.** Eine Außenschleife-Leistungssteuervorrichtung für drahtlose Kommunikationssysteme gemäß einem der Ansprüche 5 bis 7, **dadurch gekennzeichnet, dass** diese einen Radiofrequenztransmitter (202) umfasst, welcher zum Senden von Leistungssteuerinformationen an eine Basisstation (102, 103) oder an eine Mobilstation (104) des drahtlosen Kommunikationssystems geeignet ist.

**9.** Eine Außenschleife-Leistungssteuervorrichtung in einem drahtlosen Kommunikationssystem gemäß einem der Ansprüche 6 bis 8, welche in einer Drahtlos-Kommunikationsnetzwerk-Steuereinheit integriert ist.

**10.** Eine Außenschleife-Steuervorrichtung in einem drahtlosen Kommunikationssystem gemäß einem der Ansprüche 6 bis 8, welche in einer Mobilstation für drahtlose Kommunikationssysteme integriert ist.

## Revendications

**1.** Procédé de contrôle de puissance par boucle externe pour des systèmes de communication sans fil qui, à partir d'un signal de données reçu (107, 108) en provenance d'une station de base (102, 103) ou d'une station mobile (104), comprend les étapes suivantes :

l'établissement d'un taux d'erreur bloc cible ($BLER_{target}$),
l'estimation (701) du rapport signal désiré/interférence ($SIR_{rec}$) et de paramètres d'évanouissement de canal (706) caractérisant le signal reçu (107, 108),
l'estimation de marges de protection contre les évanouissements ($M_1, M_2, ..., M_N$) associées à des probabilités d'interruption ($p_{o1}, p_{o2}, ..., p_{oN}$) et aux paramètres d'évanouissement de canal (706),
l'indication de l'état des blocs de données (707) sur la base du contrôle d'un code à redondance cyclique (703), **caractérisé en ce qu'**il établit un rapport signal désiré/interférence cible ($SIR_{target}$) pour la boucle externe sur la base
dudit état des blocs de données (707),
desdites marges de protection contre les évanouissements ($M_1, M_2, ..., M_N$)
et de l'erreur bloc cible ($BLER_{target}$) de la boucle externe
au moyen d'une fonction de réglage dynamique exécutant une mise en correspondance entre
un premier critère de qualité basé sur les probabilités d'interruption ($p_{o1}, p_{o2}, ..., p_{oN}$) associées auxdites marges de protection contre les évanouissements ($M_1, M_2, ..., M_N$)
et un deuxième critère de qualité basé sur le taux d'erreur bloc cible ($BLER_{target}$),
de manière que la puissance soit adaptée aux conditions de propagation du signal de données (107, 108),
et, pour la mise en correspondance, la fonction de réglage dynamique générant
une première composante ($SIR_{outage-tgt}$) du rapport signal désiré/interférence cible ($SIR_{target}$) adapté aux conditions de propagation du signal de données (107, 108) et
une deuxième composante ($SIR_{BLER-tgt}$), obtenue à partir de l'état des blocs de données (707) et de l'erreur bloc cible ($BLER_{target}$) de la boucle externe en appliquant le deuxième critère de qualité basé sur le taux d'erreur bloc cible ($BLER_{target}$),
la fonction de réglage dynamique utilisant à la fois la première composante ($SIR_{outage-tgt}$) et la deuxième composante ($SIR_{BLER-tgt}$) pour établir le rapport signal désiré/interférence cible ($SIR_{target}$) pour ladite boucle externe et étant réglée de manière que ledit rapport signal/interférence cible ($SIR_{target}$) soit adapté aux conditions de propagation au moyen de la première composante ($SIR_{outage-tgt}$) tout en satisfaisant au deuxième critère de qualité basé sur le taux d'erreur bloc cible (BLER$_{target}$).

2. Procédé de commande de puissance par boucle externe pour systèmes de communication sans fil selon la revendication 1, **caractérisé en ce que** la fonction de réglage est exécutée au moyen d'un réseau neuronal (500) comprenant au moins une couche d'entrée dans laquelle les marges de protection contre les évanouissements (M$_1$, M$_2$, ..., M$_N$) sont entrées pour générer la première composante (SIR$_{outage\text{-}tgt}$) et une couche de sortie qui, ayant été préalablement adaptéeaux marges de protection contre les évanouissements entrées (M$_1$, M$_2$, ..., M$_N$) conjointement à l'état des blocs de données (707) et à l'erreur bloc cible (BLER$_{target}$) de la boucle externe, établit le rapport signal désiré/interférence cible (SIR$_{target}$) pour ladite boucle externe en combinant la première composante (SIR$_{outage\text{-}tgt}$) avec la deuxième composante (SIR$_{BLER\text{-}tgt}$).

3. Procédé de commande de puissance par boucle externe pour systèmes de communication sans fil selon la revendication 2, **caractérisé en ce que** la couche de sortie du réseau neuronal (500) ajoute la deuxième composante (SIR$_{BLER\text{-}tgt}$) à la première composante (SIR$_{outage\text{-}tgt}$).

4. Procédé de commande de puissance par boucle externe pour systèmes de communication sans fil selon la revendication 3, **caractérisé en ce que** le réseau neuronal (500) est formé chaque fois qu'il existe des variations dans la composante (SIR$_{BLER\text{-}tgt}$).

5. Dispositif de commande de puissance par boucle externe pour des systèmes de communication sans fil, **caractérisé en ce qu'**il comprend au moins un dispositif électronique programmable fonctionnant selon le procédé décrit dans l'une quelconque des revendications 1 à 4.

6. Dispositif de commande de puissance par boucle externe pour systèmes de communication sans fil selon la revendication 5, **caractérisé en ce que** le dispositif électronique programmable est sélectionné parmi un processeur universel, un processeur de traitement numérique du signal, un circuit intégré à application spécifique et une carte programmable ou n'importe quelle combinaison de ceux-ci.

7. Dispositif de commande de puissance par boucle externe pour systèmes de communication sans fil selon la revendication 5 ou 6, **caractérisé en ce qu'**il comprend un récepteur radiofréquence (203) capable de recevoir un signal de données (107, 108) provenant d'une station de base (102, 103) ou d'une station mobile (104) du système de communication sans fil.

8. Dispositif de commande de puissance par boucle externe pour systèmes de communication sans fil selon l'une quelconque des revendications 5 à 7, **caractérisé en ce qu'**il comprend un émetteur radiofréquence (202) capable de transmettre des informations de commande de puissance à une station de base (102, 103) ou à une station mobile (104) du système de communication sans fil.

9. Dispositif de commande de puissance par boucle externe dans un système de communication sans fil selon l'une quelconque des revendications 6 à 8, incorporé dans un contrôleur de réseau de communication sans fil.

10. Dispositif de commande de puissance par boucle externe dans un système de communication sans fil selon l'une quelconque des revendications 6 à 8, incorporé dans une station mobile pour systèmes de communication sans fil.

**RNC** *101*

*105* *106*

*103* *102*

**Node-B** **Node-B**

*108* *107*

**FIG. 1**
*100*

*104*

EP 1 926 225 B1

*202*

TRANSMITTER

TO NODE-B/MOBILE STATION

*107/108*

*201*

CONTROLLER

*203*

RECEIVER

*107/108*

FROM NODE-B/MOBILE STATION

*FIG. 2*

*200*

EP 1 926 225 B1

FIG. 3

300

EP 1 926 225 B1

$a = n$

401

$$a = \frac{e^n - e^{-n}}{e^n + e^{-n}}$$

402

**FIG. 4**

400

FIG. 5

500

*FIG. 6*

*600*

EP 1 926 225 B1

Fig. 7
700

701 $SIR_{rec}$ estimator

702 Outage Probabilities

$p_{o1}$  $p_{o2}$          $p_{oN}$

703 CRC Checker

Block Status  707

704 BLER Target

706 Channel Fading Parameters

705 Outage-Based Outer Loop Power Control (OLPC)

SIR Target

EP 1 926 225 B1

Fig. 8

EP 1 926 225 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20040137860 A
- US 20040157636 A
- US 20030031135 A
- US 6434124 B
- US 6763244 B
- US 6449462 B, Jonas Blom, Fredrik Gunnarson and Fedrik Gustafsson
- ES 200202947

### Non-patent literature cited in the description

- The ETSI UMTS Terrestrial Radio Access (UTRA) ITU-R RTT Candidate Submission. *ETSI,* June 1998
- HOLMA ; TOSKALA. WCDMA for UMTS, Radio Access for Third Generation Mobile Communications. John Wiley & Sons
- SAMPATH A ; KUMAR P S ; HOLTZMAN J M. On setting reverse link target SIR in a CDMA system. *Proceedings of the IEEE Vehicular Technology Conference,* 1997, 929-933
- HOLMA H. WCDMA for UMTS. John Wiley & Sons, LTD, 2002
- Outer-loop power control (OLPC) System Level Simulation. TOP OPTIMIZED TECHNOLOGIES (TOT), 3GPP Draft. Mobile Competence Centre, 16 May 2005
- SAMPATH A ; KUMAR P S ; HOLTZMAN J M. On setting reverse link target SIR in a CDMA system. *Proc. IEEE Vehicular Technology Conference, Phoenix, Arizona,* 1997, 929-933
- REGE KIRAN. On Link Quality Estimation for 3G Wireless Communication Networks. *Proceedings of the IEEE VTS Fall VTC2000. 52nd Vehicular Technology Conference*
- AVIDOR, DAN. Estimating the Block Error Rate at the Output of the Frame Selector in the UMTS System. *Proceedings of the Wireless Networks and Emerging Technologies (WNET '02), Wireless and Optical Communications (WOC 2002),* July 2002
- ÁLVARO LÓPEZ-MEDRANO. Optimal SIR target determination for Outer-Loop Control in the W-CDMA System. *Proceedings of the IEEE Vehicular Technology Conference (VTC) Fall 2003,* 06 October 2003
- Optimal SIR target determination for Outer-Loop Control in the W-CDMA System: Inverse SIR Cumulative Distribution Function computation throughout the Newton-Raphson Method. *Proceedings of the 12th IST Summit on Mobile and Wireless Communications,* 15 June 2003, vol. II, 732-736
- S. KANDUKURI ; S. BOYD. *IEEE Transactions on Wireless Communications,* January 2002, vol. 1 (1), 46-55
- H.R. SCHWARZ ; J. WALDVOGEL. Numerical Analysis. John Wiley&Sons
- MARTIN T. HAGAN ; HOWARD B. DEMUTH ; MARK H. BEALE. Neural Network Design. PWS Pub. Co, 1995